# EUROPEAN PATENT APPLICATION

(11) **EP 0 645 924 A1**
(43) Date of publication of application: **29.03.1995**
(21) Application number: 94114496.6
(22) Date of filing: 15.09.1994
(51) Int. Cl.: H04N 1/50, H04N 1/195

(54) **Method and apparatus for exposing photosensitive media with multiple light sources**

(30) Priority: 20.09.1993 US 123839
(71) Applicant: EASTMAN KODAK COMPANY, Rochester, New York 14650-2201 (US)
(72) Inventor: Smith, Douglas H., Rochester, New York 14650-2201 (US); Carson, John F., Rochester, New York 14650-2201 (US); Ference, Roy B., Rochester, New York 14650-2201 (US); Appel, Karen J., Rochester, New York 14650-2201 (US)
(74) Representative: Blickle, K. Werner, Dipl.-Ing.

(57) **Abstract**

A multi-beam color exposure system which comprises a plurality of mono-color light sources (LED's or laser diodes) arranged to emit a plurality of light beams which are focused to form a plurality of writing spots on a photosensitive material. The light sources are moved with respect to the photosensitive material in a fast scan direction and in a slow scan direction. The light sources form a plurality of writing spots on the photosensitive material as a plurality of substantially parallel lines of the writing spots, with the lines of individual images disposed substantially parallel to the fast scan direction. The light sources forming the writing spots in a single line produce substantially the same color light, and the light sources forming the writing spots in at least one of the lines producing a different color light than the color of the light produced by the light sources in the other lines. Each of the light sources is provided with an information signal to generate the writing spots on the photosensitive material, whereby each information signal for a given color is provided sequentially to each mono-color light source in that column as the writing spots are scanned onto the photosensitive material to thereby repeat each signal by each mono-color light source in that column onto substantially the same image location on the photosensitive material.

## Description

### Field of the Invention

The present invention relates in general to the field of electronic printing of digitized images and, specifically, to electronic printing systems that utilize a rotor with an improved LED write head having multiple light sources to record information by scanning photosensitive media.

### Background of the Invention

Photographic printing of digitized images is accomplished by modulating the intensity of a light beam that forms a writing spot on photosensitive media as the beam moves relative to the photosensitive media. One common motion pattern moves the light beam rapidly along a single line as a single row of image pixels and the light beam is modulated with "clocked out" image informationstarting from a fixed margin location on a page. The beam or the media is then indexed to the next line of the page and the beam is returned to the margin before writing the next row of pixels.

One such printer using lasers is disclosed in U.S. Patent No. 5,026,133 which illustrates a system for printing photographic images from digitized data that utilizes a laser beam to write on a photographic media. The laser beam is incident on a pentaprism that is rotated within a support cylinder by a drive motor. The pentaprism reflects the laser beam to a surface of photographic media retained within the support cylinder. The pentaprism and associated drive motor are mounted on a lead screw which is turned by an index motor. The movement of the lead screw causes the pentaprism to be indexed to the next line location.

Another example of a printer using lasers for digitally writing on photosensitive media is disclosed in U. S. Patent No. 4,479,133 which discloses a rotating print head which scans the photosensitive media on a stationary print shoe. The rotating head carries four laser beam-projecting sections equispaced about the periphery of the head. Each of the sections comprises four laser projecting systems for projecting four spaced beams of light onto the photosensitive media. This printer only discloses single color light sources, so it would not be useful with full color photosensitive material.

Both of the foregoing patents disclose the use of laser light sources which are more expensive than other light sources, thus reducing their economic viability in the marketplace. Moreover, unless bulky, expensive gas lasers are used, which require complex and expensive control and operational circuitry, it is still not possible to produce full color photographs on conventional photographic paper. This is because diode lasers are not yet available which can produce all of the colors necessary to produce color photographs using standard color photographic materials such as paper and film.

In order to reduce the expense of electronic printing systems, the lasers and the pentaprism can be replaced by an array of light emitting diodes (LED's) positioned on a rotor which spins within a media support cylinder. The rotor is axially translated through the support cylinder, as in the case of the pentaprism in the system described above, to index the LED array to the next image line or lines. The light emitting diodes can be directly modulated with relatively simple electronic drive circuitry, and can be employed with relatively inexpensive, compact and reliable hardware. However, unlike laser light sources, LED's emit incoherent light which is not readily collimated and which provides relatively low efficiency with the use of prior art rotating multifaceted mirrors and galvanometer-driven mirrors to deliver and scan the light onto the media. The efficiency of the delivery of the light energy to the photosensitive media is improved by use of a high numerical aperture collection and delivery system in close proximity to the photosensitive material and predicates the present scanning method instead of the prior art.

Heretofore, LED light sources for digital printing applications have been arranged in arrays with a linear configuration wherein each individual LED writes a unique line on the media as the array is moved with respect to the media, such as disclosed in U. S. Patent No. 4,918,465. In the printing apparatus disclosed in this patent, a plurality of stationary LED's are arranged as an array to direct a plurality of focused images of light simultaneously onto a moving photosensitive material, e.g. media wrapped around the outside of a rotating drum. The array of LED's is arranged to produce a plurality of colors to expose color photographic media. The array disclosed in this patent is arranged to provide a plurality of scanned lines, three in the preferred embodiment, each including three different colors, which expose three parallel multi-color lines of the image simultaneously. The scanning is disclosed as being either a continuous helical scan or as a step and repeat scan. While such an arrangement provides an efficient, high speed system, it has been found the image uniformity suffers because of differences in the output efficiency among the individual LED's. This non-uniformity is apparent in the image produced as image "banding" or "streaking" resulting from differences in the image density from one image line to the next due to the unequal exposure from the dissimilar light output (for the same input signal level) from the individual LED's in the adjacent lines of the array. This banding is aggravated by use of multiple scan lines since it creates lower frequency and, therefore more easily perceived, banding artifacts than single line scanning. It has been found that differences in output of the respective LED's must be less than 0.5% for satisfactory high-quality, continuous-tone image production, while typical LED's have output level differences of ±5.0%, an order of magnitude difference. While attempts have been made at providing sophisticated control and drive circuitry to regulate the LED's in such printing arrays or to provide LED's with very accurate output levels, they have been less than satisfactory because of the variability of the results and the expense.

U. S. Patent No. 4,563,747 discloses a photocomposing apparatus utilizing LED's for exposing a mono-color image on a black and white photographic film. At first glance it may appear that the image pixels are built up of a plurality of exposures by a plurality of LED's. However, it will be seen that the pixels are formed by overlapping exposures from LED's which are arranged in offset rows. Thus, the pixels are not truly generated by a plurality of superposed exposures and but are formed by a plurality of partially overlapping exposures. This, of course, produces images which are less sharp than were the exposures truly superposed. Moreover, this reference does not provide for the generation of a color image.

U. S. Patent No. 4,809,020 is directed to an electronic image printer for forming color images using multi-color LED's exposing the same image pixel. This patent teaches that two green LED's are utilized to compensate for the low light output available from the green LED's employed. However, each of the other colors is only exposed by one LED each which places a limit on the rate at which images can be produced.

It will thus be seen that a high speed printer capable of producing full color images, for example on conventional photographic paper, using digitized information and employing simple and inexpensive light sources while eliminating the image artifacts found with previous systems will be commercially advantageous. Thus, the invention provides an LED write head assembly for use in a rotary drum printing system, which provides a full color image to conventional photosensitive media without the image non-uniformity because of image banding or streaking resulting from prior art LED exposure heads.

### Summary of the Invention

According to a first embodiment of the present invention a multi-beam color exposure system is provided which comprises a plurality of mono-color light sources arranged to emit a plurality of light beams which are focused to form a plurality of individual writing spots on a photosensitive material. Means is provided for moving the light sources with respect to the photosensitive material in a fast scan direction and in a slow scan direction. The light sources are arranged to form a plurality of writing spots on the photosensitive material as a plurality of substantially parallel lines of the writing spots, with the lines of the writing spots being disposed substantially parallel to the fast scan direction. The light sources forming the writing spots in a single line produce substantially the same color light, and the light sources forming the writing spots in at least one of the lines producing a different color light than the color of the light produced by the light sources in the other lines.

In accordance with another embodiment of the present invention a light array for a multi-beam color exposure system is provided comprising a plurality of mono-color light sources arranged in columns and rows to emit a plurality of light beams which are focused to form a plurality of writing spots on a photosensitive material as the light array is moved with respect to a photosensitive material in a fast scan direction and in a slow scan direction. The light array comprises a plurality of individually addressable light sources arranged to form a plurality of writing spots on the photosensitive material as a plurality of lines of the individual images with the lines disposed substantially parallel to the fast scan direction. The light sources forming the writing spots in a single line producing substantially the same color light, and the light sources in a column which form the writing spots in at least one of the lines producing a different color light than the color of the light produced by the light sources in the other columns.

In accordance with still another embodiment of the present invention a light array is provided for a multi-beam color exposure system. The light array comprises a plurality of mono-color light sources arranged in columns and rows to emit a plurality of light beams which are focused to form a plurality of writing spots on a photosensitive material as the light array is moved with respect to the photosensitive material in a fast scan direction and in a slow scan direction. The light sources are individually addressable to form a plurality of writing spots on the photosensitive material as a plurality of lines of the writing spots with the lines disposed substantially parallel to the fast scan direction. The light sources in a column forming the writing spots in a single line produce substantially the same color light, and the light sources in a column which form the writing spots in at least one of the lines producing a different color light than the color of the light produced by the light sources in the other columns. Means is also provided for supplying each of the light sources with an information signal to generate the writing spots on the photosensitive material, and means is provided for supplying each information signal for a given color sequentially to each mono-color light source in that column as the writing spots are scanned onto the photosensitive material to thereby repeat each signal by each mono-color light source in that column onto substantially the same image location on the photosensitive material.

In accordance with yet another embodiment of the present invention a method is provided for generating a multi-color image using a multi-beam color exposure system comprising a light array formed of a plurality of mono-color light sources arranged in columns and rows to emit a plurality of light beams which are focused to form a plurality of writing spots on a photosensitive material. The method comprises the steps of moving the light array with respect to a photosensitive material in a fast scan direction and in a slow scan direction, wherein the light array comprises a plurality of individually addressable light sources arranged to form a plurality of writing spots on the photosensitive material as a plurality of lines of the writing spots with the lines disposed substantially parallel to the fast scan direction. The writing spots are formed in a single line with light sources in a single column producing substantially the same color light. The writing spots in at least one of the lines of the writing spots are formed with light sources in a column producing a different color light than the color of the light produced by the light sources in the other columns. Each of the light sources is supplied with an information signal to generate the writing spots on the photosensitive material. Each information signal for a given color is supplied sequentially to each mono-color light source in that column as the writing spots are scanned onto the photosensitive material to thereby repeat each signal by each mono-color light source in that column onto the same image location on the photosensitive material.

Various means for practicing the invention and other features and advantages thereof will be apparent from the following detailed description of illustrative, preferred embodiments of the invention, reference being made to the accompanying drawings.

### Brief Description of the Drawings

Fig. 1 is a perspective view of a rotary printing system that utilizes an LED array positioned in a rotor according to the present invention;
Fig. 2 is an exploded perspective view of the rotor of the system shown in Fig. 1;
Fig. 3 is a greatly enlarged perspective view of an LED array in accordance with the present invention;
Fig. 4 is an enlarged schematic plan view of the LED array illustrated in Fig. 3;
Fig. 5 is an enlarged schematic elevation section of the LED array taken along line 5-5 of Fig. 4;
Fig. 6 is a schematic illustration of successive pixel exposures by the LED array of the present invention; and
Fig. 7 is a graphic illustration of the generation of pixels on a photosensitive element according to the present invention.

### Detailed Description of the Preferred Embodiment

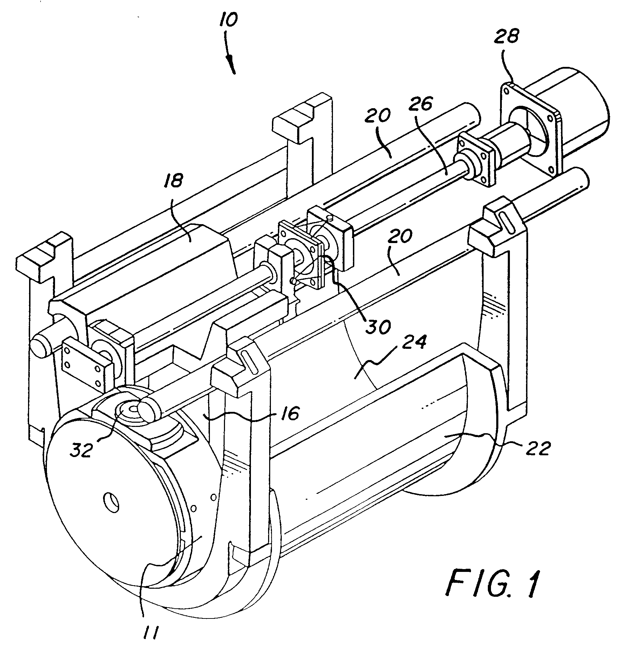

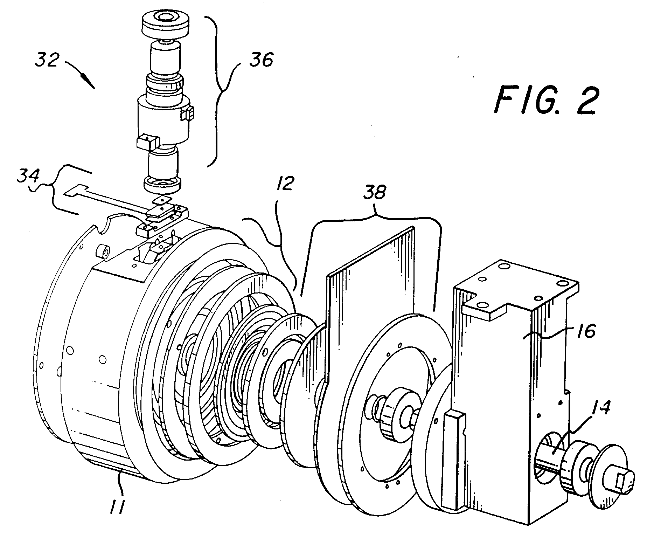

A rotary printing system 10 employing a multi-beam color exposure system of the present invention is illustrated in Figs. 1 and 2, and includes a rotor 11 coupled to a drive motor 12 via a drive shaft 14. The drive shaft 14 is supported by a support pedestal structure 16 which hangs from a translator base 18 which is supported for movement along a pair of guide rails 20. The rotor is arranged to spin and move axially within a stationary cylindrical print shoe 22 which is provided with a sheet of photosensitive material 24 on the inner surface thereof. The rotor 11 is attached to a linear translation assembly comprising the pedestal structure 16 and the translator base 18, and a lead screw mechanism 26 driven by a stepper motor 28, with the lead screw being connected to the translator base 18 by a coupling 30. The rotor is simultaneously rotated by drive motor 12 in a fast scan direction and is translated past the stationary print shoe in the slow scan direction (axially) by the stepper motor 12, lead screw 26 and coupling 30, thereby achieving a raster scan pattern on the photosensitive media held within the print shoe.

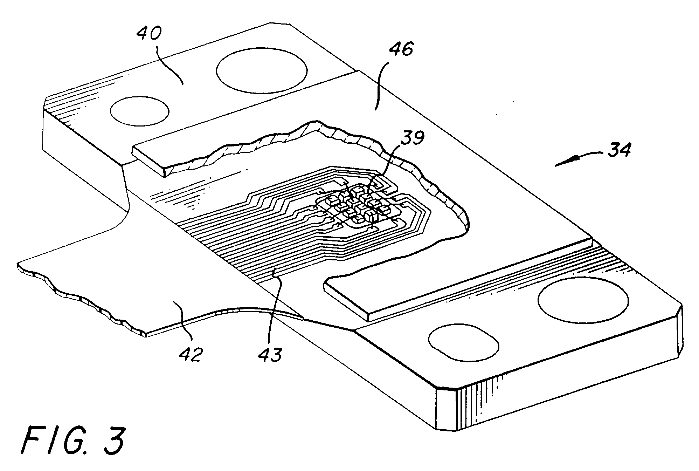

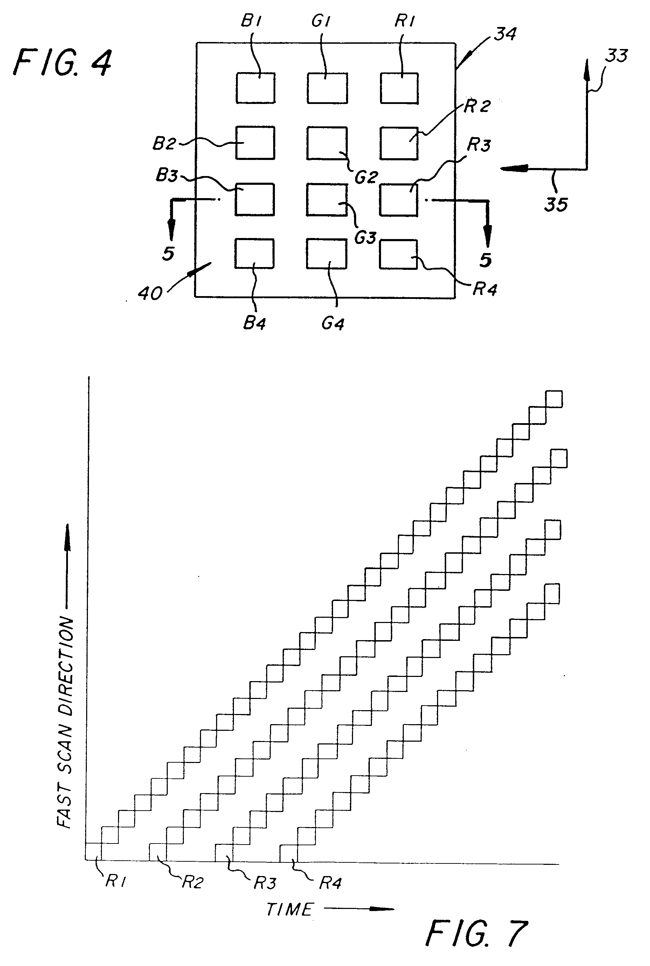

An LED printhead assembly 32 is mounted in the rotor 11 and comprises a plurality of mono-color light sources such as an array of LED's 34 (see FIGS. 3 and 4), and a projection lens assembly 36. The printhead assembly is located within the body of the rotor, as shown in Figure 2, with the LED array package positioned so that the LED aperture output surface is located in a plane which is perpendicular to the optical axis of the projection lens assembly. The projection lens is arranged to simultaneously image or focus all of the LED's in the array onto a surface located in close proximity above the outer surface of the rotor, and more particularly, onto the surface of the photosensitive material held by the print shoe 22. A single lens thereby images or focuses the plurality of LED's onto the photosensitive material as a plurality of individual images which constitute the writing beams that expose the image pixels.

Image and clock data, and power to drive the LED array, are transmitted to the rotor via a rotary transformer 38, the primary winding of which is mounted to the pedestal structure 16 and the secondary winding of which is mounted to the rotor 11 in accordance with the teachings of the above-identified copending applications in the names of Orlicki et al. An encoder mechanism (not shown) is also provided to synchronize the activation of the LED array with the rotation of the rotor and the transfer of the digital image data and power to the LED array as the rotor rotates also in accordance with the teachings of the above-identified copending applications.

The LED array 34 described herein is arranged to generate a continuous-tone, full-color image from a digital input signal. The LED array is shown in greater detail in FIGS. 3, 4 and 5 and, in the preferred embodiment, comprises twelve individual LED's 39, arranged in three columns of four LED's each, configured such that the columns are arranged substantially parallel to the fast scan direction 33 of movement of the rotor, i.e. the rotation of the rotor. In the preferred embodiment, the three columns each correspond to red, green and blue LED's, respectively; thus, the first column contains four red LED's, R₁-R₄, the second column contains four green LED's, G₁-G₄, and the third row contains four blue LED's, B₁-B₄ (Figure 4), with the columns of light sources, and the lines of images produced thereby, being substantially parallel and spaced in the slow scan 35 direction of movement of the rotor.

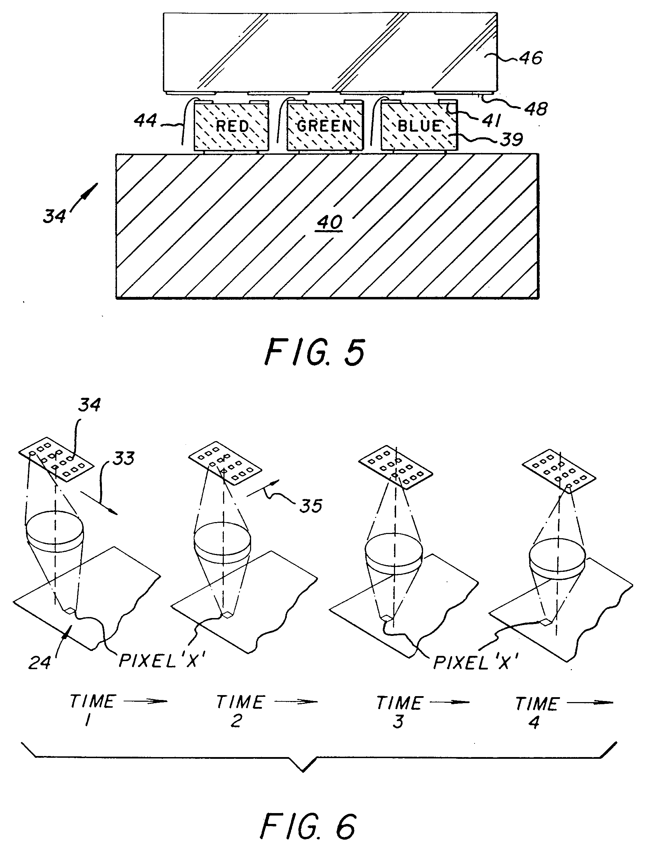

Referring to FIG. 5, the LED array 34 is fabricated on a relatively thick block 40 of copper which acts as an efficient heat sink structure as well as a common anode electrode for all of the individual LED's 39. Each individual LED 39 is formed with an aperture cathode electrode 41 allowing a direct optical view of the light-emitting portion of the diode. The aperture cathode on each LED allows a direct view of the LED junction, thereby allowing a large fraction of the emitted optical radiation to be collected and conveyed by the projection lens assembly to form a writing beam or spot on the photosensitive material. The LED's are mounted on the heat sink 40 so that the aperture cathodes 41 lie in a common plane. Each LED in the printhead is individually modulated with image data by applying appropriate levels of drive current to achieve any of a multiplicity of exposure levels, in the preferred embodiment 256 different levels so that a continuous tone image can be generated. A polyimide flex circuit 42 (see FIG.3) with a rectangular aperture to provide clearance for the LED array, and with an appropriate number of gold-flashed copper signal traces 43 and bond pads, is soldered or adhesively bonded to the copper heat sink. The back surface of the flex circuit is a solid copper ground plane which functions as the electrically common anode connector. An individual electrical connection is made to each LED by a wire bond 44 from the LED cathode surface to the bond pads on the flex circuit 42. The opposite end of the flex circuit is connected to the LED drive electronics in the rotor 11.

It is known that LED's are inherently inefficient devices with significant amounts of unwanted thermal energy generated as a result of normal operation. This thermal energy generation can increase rapidly with increased drive current and can result in a detrimental wavelength shift and output efficiency drop of the emitted light energy. Thus, the efficient dissipation of thermal energy at the diode/block interface is crucial for reliable operation in a continuous-tone printing application, and is provided by the foregoing construction.

A precision aperture array mask is fabricated using a .010" thick glass substrate 46 coated on both surfaces with a broadband anti-reflection coating (e.g., MgF₂) and subsequently coated (on one surface only) with an electrically nonconductive black opaque coating 48 such as Si or black polyimide. The array pattern of three columns of four square apertures each is etched in the opaque coating on precise centers using precision photo-lithographic methods. The array aperture mask is then aligned to the LED array 34 and is mounted to the top of the polyimide flex circuit structure 42 with a perimeter epoxy bond, thereby sealing the array. The size and shape of the aperture will determine the size and shape of the writing spot on the media. In the preferred embodiment the writing spot size and shape on the media are substantially the same as that of the pixel on the media.

The LED array is positioned within the body of the rotor 11 such that optical radiation from each individual LED is collected and conveyed to form a separate and distinct writing spot on the stationary photosensitive material 24 located in close proximity to the circumferential surface of the rotor. In the preferred embodiment, this is accomplished by the reflective optical system 36 disclosed in the above-identified Palum application, but may also be accomplished with a refractive optical system.

As disclosed above, the LED array comprises three columns of four LED's each; with each column comprised of a single color, and with at least one of the rows having a different color than the other rows and, preferably, with one row each having one of red, green and blue color light output. In the preferred embodiment the individual LED's in each of the columns are spaced such that the writing spots are spaced an integral number of pixel distances apart when imaged onto the photosensitive material. This facilitates simplicity in image data clock-out. In a like manner, each of the columns is located an integral number of line distances apart when imaged onto the photosensitive material. In the preferred embodiment, the writing spots produced by the four LED's in each column are spaced a distance of four pixels apart when imaged on the photosensitive material, and the columns are spaced a distance of four lines apart .

In recording on the photosensitive material, three columns of four pixels each on the photosensitive material will receive simultaneous exposures. When the photosensitive material is conventional photographic paper, one column of pixels will be exposed by the red LED's, one column will be exposed by the green LED's and one column will be exposed by the blue LED's (assuming that all colors of an individual pixel are to be exposed). As the rotor 11 and thus the printhead assembly 32 move along a helical path, comprising both rotational and translational components, a first column of red pixels will be exposed on the photosensitive material by the column of four red LED's, with each pixel being exposed to an exposure from each red LED of approximately one-quarter of the total red exposure called for by the image-bearing information signal. Four scan lines later, the first column of pixels will be exposed to the column of green LED's and four scan lines later, to the column of blue LED's. Thus, the LED array is configured such that in the final print image, each pixel can receive 12 successive exposures, if the information signal calls for such an exposure. As noted above, and as illustrated in FIG. 6, the array is mounted such that four LED's of the same color are aligned in the direction of the fast scan 33 (achieved by rotation of the rotor) and deliver four successive exposures of the same color in rapid succession to the same image pixel 'X'. In the preferred embodiment, the time between exposures is an integral number of pixel times for simplification of image data clock-out, and is minimized to reduce unwanted latent image decay (intermittency effect) which would be manifested as reduced exposure efficiency. The exposure scheme of the present invention treats each of the twelve LED's as a discrete exposure source, rather than as a part of an array that is simultaneously writing multiple lines.

Another way of illustrating the present method of generating an image is shown in FIG. 7 wherein the pixel generation is plotted with pixel position in the fast scan direction versus time. It will thus be seen that as time advances, the pixels being written by the first red LED R₁ are positioned along the fast scan direction along the photosensitive material. Four pixel times later the first pixel written by the second red LED R₂ is written at the same position, along the fast scan direction, as the first pixel written by the first LED R₁. This continues for each of the subsequent red LED's R₃ and R₄, and four scan lines later, with the four green LED's and then, four scan lines later, with the four blue LED's until each pixel has received twelve exposures.

In addition to compensating for device to device non-uniformity, the present method precludes low-frequency banding artifacts that would be evident in configurations where several image lines are written concurrently and a visible image density discontinuity appears where lines written during the first pass adjoin lines written during the second pass. Furthermore, by the quick, successive exposure of each light of the same color, the intermittency effect on the exposure speed is minimized.

### Alternative Embodiments

While the preferred embodiment is directed to the production of images on conventional photographic paper, it will be understood that the invention can be used with any type of photosensitive material including, but not limited to, conventional photographic film, and to films which are conventionally sensitized as well as those which are sensitive to infra-red radiation and those which are false sensitized. It will be appreciated that in such instances that the characteristics of the light emitted by the LED's will be selected to match the sensitivity, or combinations of sensitivity, of the photosensitive material being used. Still further, it will be appreciated that the LED's can be replaced with laser diodes with an improvement in light output and exposure speed, but at a higher cost.

Still further, it will be appreciated that should the nature of the photosensitive material require it, it is possible to use different numbers and arrangements of the LED array. For example, should the photosensitive material be particularly insensitive to a particular color light, additional columns of LED's producing that color light can be added to the array.

While the pixel spacing has been set forth as being an integral number of pixels apart, it will be understood that it is also possible for the spacing to be a non-integer number with the appropriate modification of the information signal and data handling protocol.

It will also be appreciated that, while the preferred embodiment contemplates varying only the light output to produce a continuous tone image, the exposure time may also be modulated, or a combination of the two may be employed, to provide the desired result. Likewise, while square diode masks and pixel shapes have been disclosed, other geometric shapes may be used for the aperture masks with a corresponding change in the writing spot size and shape.

The invention has been described with reference to a preferred embodiment thereof. It will be understood, however, that modifications and variations are possible within the scope of the appended claims.

### Industrial Utility

The invention can be utilized in any rotary printing system that requires the rotation of a light source to scan writing beams on a photosensitive material. The invention is particularly useful providing high quality photographic prints from digitized image data without the image artifacts of the prior art.

### PARTS LIST

- 10: ROTARY PRINTING SYSTEM
- 11: ROTOR
- 12: DRIVE MOTOR
- 14: DRIVE SHAFT
- 16: PEDESTAL STRUCTURE
- 18: TRANSLATOR BASE
- 20: GUIDE RAILS
- 22: PRINT SHOE
- 24: PHOTOSENSITIVE MATERIAL
- 26: LEAD SCREW MECHANISM
- 28: STEPPER MOTOR
- 30: COUPLING
- 32: PRINTHEAD ASSEMBLY
- 33: FAST SCAN DIRECTION
- 34: LED ARRAY
- 35: SLOW SCAN DIRECTION
- 36: PROJECTION LENS ASSEMBLY
- 38: ROTARY TRANSFORMER
- 39: LED
- 40: HEAT SINK BLOCK
- 41: APERTURE CATHODE ELECTRODE
- 42: FLEX CIRCUIT
- 43: SIGNAL TRACES
- 44: WIRE BOND
- 46: GLASS SUBSTRATE
- 48: OPAQUE COATING MASK

## Claims

1. A multi-beam color exposure system comprising a plurality of mono-color light sources arranged to emit a plurality of light beams which are focused to form a plurality of individual writing spots on a photosensitive material, and
means for moving said light sources with respect to said photosensitive material in a fast scan direction, means for moving said light sources in a slow scan direction,
said light sources being arranged to form a plurality of writing spots on said photosensitive material as a plurality of substantially parallel lines of said writing spots, said lines of writing spots being disposed substantially parallel to the fast scan direction, the light sources forming the writing spots in a single line producing substantially the same color light, and the light sources forming the writing spots in at least one of the lines producing a different color light than the color of the light produced by the light sources in the other lines.

2. A multi-beam color exposure system as claimed in claim 1 wherein said photosensitive material is sensitive to light of at least two different colors and said mono-color light sources produce light having a color to which the photosensitive material is sensitive.

3. A multi-beam color exposure system as claimed in claim 2 wherein said light sources produce colors selected from the visible and the IR spectrum.

4. A multi-beam color exposure system as claimed in claim 2 wherein said photosensitive material is conventional photographic paper and said light sources produce red, green and blue light.

5. A multi-beam color exposure system as claimed in claim 4 wherein the light sources producing the writing spots in each of the lines produce one of the light colors.

6. A multi-beam color exposure system as claimed in claim 1 wherein means is provided to supply each of said light sources with an information signal to generate said writing spots on said photosensitive material, and each information signal for a given color is provided sequentially to each mono-color light source in that line as the writing spots are scanned onto the photosensitive material to thereby repeat each signal by each mono-color light source in that line onto the same image location on the photosensitive material.

7. A multi-beam color exposure system as claimed in claim 6 wherein each of said information signals is arranged to actuate said light sources to produce a light output related to said information signal whereby a continuous tone image is produced on said photosensitive material.

8. A multi-beam color exposure system as claimed in claim 1 wherein said light sources comprise an array of light emitting diodes disposed in a corresponding line order as said writing spots.

9. A multi-beam color exposure system as claimed in claim 1 wherein said light sources comprise an array of laser diodes disposed in a corresponding line order as said writing spots.

10. The method of generating a multi-color image using a multi-beam color exposure system comprising a light array formed of a plurality of mono-color light sources arranged in columns and rows to emit a plurality of light beams which are focused to form a plurality of writing spots on a photosensitive material comprising the steps of:
moving said light array with respect to a photosensitive material in a fast scan direction and in a slow scan direction, wherein said light array comprises a plurality of individually addressable light sources arranged to form a plurality of writing spots on said photosensitive material as a plurality of lines of said writing spots with the lines disposed substantially parallel to the fast scan direction,
forming the writing spots in a single line with light sources in a single column producing substantially the same color light,
forming the writing spots in at least one of the lines of said writing spots with light sources in a column producing a different color light than the color of the light produced by the light sources in the other columns,
supplying each of said light sources with an information signal and generating said writing spots on said photosensitive material, and
supplying each information signal for a given color sequentially to each mono-color light source in that column as the writing spots are scanned onto the photosensitive material to thereby repeat each signal by each mono-color light source in that column onto the same image location on the photosensitive material.

11. The method of generating a multi-color image using a multi-beam exposure system comprising a plurality of mono-color light sources arranged to emit a plurality of light beams which are focused to form a plurality of writing spots on a photosensitive material, comprising the steps of:
moving said light sources with respect to said photosensitive material in a fast scan direction and in a slow scan direction,
forming a plurality of individual images on said photosensitive material as a plurality of lines of said writing spots substantially parallel to the fast scan direction by sequentially exposing each of the image locations in said lines with said light sources as said photosensitive material is scanned past said light sources, and
supplying an information signal sequentially to each of said light sources to activate said light sources to form said writing spots on said photosensitive material thereby providing each of said signals to each of said light sources to impart the same image to the same portion of said photosensitive material as that to which that image is imparted by said other light sources.

12. The method of generating a multi-color image as claimed in claim 21 including the step of actuating said light sources with said information signal to produce a light output level related to said information signal whereby a continuous tone image is produced on said photosensitive material.

13. The method of generating a multi-color image as claimed in claim 21 wherein said light sources are arranged in columns and rows with the columns arranged substantially parallel to the fast scan direction and including the step of actuating said light sources in a single column with an information signal for a single color to produce a light output level related to said information signal and supplying a different color signal to said light sources in each of said columns whereby a continuous tone multi-color image is produced on said photosensitive material.

14. The method of generating a multi-color image as claimed in claim 23 wherein said columns of said light sources are spaced apart to produce writing spots on said photosensitive material which are spaced apart an integral number of scan lines.

15. The method of generating a multi-color image as claimed in claim 23 wherein said light sources in a column are spaced apart to produce writing spots on said photosensitive material which are spaced apart an integral number of pixel spacings.
